Europäisches Patentamt

European Patent Office

Office européen des brevets

(19)

(11) Publication number: **0 442 699 A2**

(12) **EUROPEAN PATENT APPLICATION**

(21) Application number: 91301120.1

(22) Date of filing: 12.02.91

(51) Int. Cl.⁵: **H04N 1/46, H04N 1/18,
G06K 7/10**

(30) Priority: 13.02.90 IL 93368

(43) Date of publication of application:
21.08.91 Bulletin 91/34

(84) Designated Contracting States:
AT BE CH DE DK ES FR GB GR IT LI LU NL SE

(71) Applicant: SCITEX CORPORATION LTD.
7 Hamada Street
Herzliya 46103 (IL)

(72) Inventor: Nagler, Michael
27 Ben Yosef Street
Tel Aviv (IL)

Inventor: Melman, Haim
3 Hagai Street
Kfar Saba (IL)
Inventor: Yanai, Moshe
22 Argaman Street
Alfei Menashe (IL)
Inventor: Kleinstern, Amir
4 Shai Agnon Street
Kiron (IL)
Inventor: Shalev, Eliayahu
10 Ostashinsky Street
Kfar Saba (IL)

(74) Representative: Hillier, Peter et al
Reginald W. Barker & Co., 13, Charterhouse
Square
London, EC1M 6BA (GB)

(54) **A colour separation scanner.**

(57) A color separation scanner comprising a support arranged for mounting thereon of a two-dimensional image to be scanned and color separation sensing apparatus arranged for sensing the two-dimensional image. The color separation apparatus includes a scanning head located a fixed distance from the two-dimensional image, at least first and second objective lens assemblies and apparatus for selectively arranging each of the at least first and second objective lens assemblies in fixed locations along the optical path between the image and the scanning head.

FIG. 1A

FIG. 1B

## FIELD OF THE INVENTION

The present invention relates to color separation scanners generally.

## BACKGROUND OF THE INVENTION

Color separation scanners are well known and are operative to scan two dimensional color images, such as prints or transparencies, and to produce electrical signals which represent color separations thereof for subsequent use in process color printing.

Conventional scanners, such as those manufactured and sold by Hell of Germany and Dainippon Screen Seizo of Japan, typically employ a rotating drum onto which the two dimensional color image is mounted. The drum rotates past a scanning head, which may comprise a CCD array, as taught in U.S. Patent 4,256,969. According to that patent, a separate scan is carried out for each separation.

Various techniques are presently known for color separation in array detector based systems. One technique employs three primary Red, Green, and Blue filters installed over the scanning head of a single CCD linear or area array. A color image can be constructed by repeatedly scanning the image, each time with a different filter.

A second technique employs three colored fluorescent lamps. The image is repeatedly scanned, each time under the illumination of a different lamp.

A third technique employs three sensors and dichroic mirrors or filters for separating the three elements of color, each of which is detected by a separate sensor. In its current state of the art, this third technique has not achieved images of a high enough quality to fulfill the requirements of pre-press processing.

Another technique employs a single CCD chip including three linear arrays, each having deposited thereon a different color filter. Lines are read in three colors and combined using electronic hardware. A delay of several lines is interposed between the lines read in the different colors.

There is described and claimed in applicants'/assignee's copending U.S. Patent Application Serial No. 07/044,428, a scanner which comprises a movable support arranged for mounting thereon of a two-dimensional image to be scanned and color separation sensing apparatus arranged for sensing the two-dimensional image for providing electrical signals representing color separations of the two-dimensional image, the color separation sensing apparatus including a scanning head including a plurality of CCD arrays, each associated with a corresponding dichroic filter, operative for simultaneous scanning of the two-dimensional image.

That scanner comprises a movable support arranged for mounting thereon of a two-dimensional image to be scanned and having first and second ranges of operative orientations, television sensing apparatus arranged for sensing the two-dimensional image when the movable support is in a first range of operative orientations for providing a visible display of the two-dimensional image to an operator and color separation sensing apparatus arranged for sensing the two-dimensional image when the movable support is in a second range of operative orientations for providing electrical signals representing color separations of the two-dimensional image.

The scanner includes focusing apparatus arranged such that the color separation sensing apparatus and the television sensing apparatus are mounted on a common member, whereby focusing of the television sensed image automatically provides focusing of the color separation sensed image.

## SUMMARY OF THE INVENTION

The present invention seeks to provide an improved color separation scanner of the type described and claimed in U.S. Patent Application 07/044,428 corresponding to Israel Patent Application 78675.

There is thus provided in accordance with a preferred embodiment of the present invention a color separation scanner comprising a support arranged for mounting thereon of a two-dimensional image to be scanned and color separation sensing apparatus arranged for sensing the two-dimensional image. The color separation apparatus includes a scanning head located a fixed distance from the two-dimensional image, at least first and second objective lens assemblies and apparatus for selectively arranging each of the at least first and second objective lens assemblies in fixed locations along the optical path between the image and the scanning head.

Furthermore, there is provided in accordance with a preferred embodiment of the present invention, a color separation scanner comprising a support arranged for mounting thereon of a two-dimensional image to be scanned and color separation sensing apparatus arranged for sensing the two-dimensional image to generally simultaneously provide electrical signals representing color separations of the two-dimensional image. The color separation apparatus includes a scanning head located a fixed distance from the two-dimensional image.

Additionally, in accordance with a preferred embodiment of the present invention, the scanning head includes a plurality of CCD arrays, each associated with a corresponding dichroic filter, and each disposed in a different focal plane.

Additionally, in accordance with a preferred embodiment of the present invention, the color separation sensing apparatus comprises a three-channel color linear CCD imager with three filters over which are placed integral color filters.

Moreover, in accordance with a second embodiment of the present invention, the color separation sensing apparatus also comprises at least first and second objective lens assemblies and apparatus for selectively arranging one of the objective lens assemblies in a nominally fixed location along the optical path between the image and the CCD arrays. The apparatus for selectively arranging includes apparatus for fine tuning the location of the objective lens assemblies near the nominally fixed location.

Further in accordance with an embodiment of the present invention, there is provided a color separation scanner comprising a support arranged for mounting thereon of a two-dimensional image to be scanned and color separation sensing apparatus arranged for sensing the two-dimensional image for providing electrical signals representing a multiplicity of color separation of the two-dimensional image wherein the color separation apparatus defines an optical axis and includes at least first and second objective lens assemblies each having a multiplicity of focal planes corresponding to the multiplicity of color separations wherein for each color separation, an intersection of the corresponding focal plane and the optical axis is substantially identical for all of the at least first and second lens assemblies.

Still further in accordance with an embodiment of the present invention, there is provided a color separation scanner comprising a cassette arranged for mounting thereon of a two-dimensional image to be scanned and color separation sensing apparatus, the cassette comprising first and second transparent plates mounted on respective frames and joining apparatus openable to 90° for fixedly and flexibly joining together the first and second transparent plates. The joining apparatus additionally comprises apparatus for elastically forcing together the first and second transparent plates when the cassette is closed.

Additionally, in accordance with a preferred embodiment of the present invention, the apparatus for elastically forcing together comprises a hinge eccentrically mounted to the frames for forcing the first and second transparent plates firmly against each other when the cassette is closed and a lock for ensuring that the frames stay together when the cassette is closed.

There is provided in accordance with a preferred embodiment of the present invention, a cassette comprising first and second transparent plates mounted on respective frames and joining apparatus openable to 90° for fixedly and flexibly joining together the first and second transparent plates.

Further, in accordance with a preferred embodiment of the present invention, the color separation scanner comprises apparatus for receiving the cassette and for placing the cassette in an operative location on a cassette holder. The cassette holder is rotatable within 360°. Additionally, the cassette holder includes reference surfaces against which one of the transparent plates of the cassette are placed. In this manner, the plates are accurately placed along the optical axis.

Still further, in accordance with a preferred embodiment of the present invention, the color separation scanner comprises apparatus to illuminate a strip of the two-dimensional image. The illumination apparatus comprises fluorescent illumination and a guide to direct the light through the two-dimensional image.

Still further, in accordance with a preferred embodiment of the present invention, the CCD arrays are positioned in an optical head such that each CCD is positioned at the best focal plane for the color separation that it senses and wherein the best focal plane is substantially identical for each of the at least first and second objective lens assemblies.

Further, in accordance with a preferred embodiment of the present invention, the color separation scanner also comprises a light table assembly comprising a lamp, a set of filters, a diffuser and a screen.

Additionally, in accordance with a preferred embodiment of the present invention, the color separation sensing apparatus comprises a single CCD array and a plurality of different filters disposed in selectable optical communication with the CCD array.

Moreover, in accordance with a preferred embodiment of the present invention, the color separation scanner comprises apparatus for scanning the two-dimensional image and includes apparatus to expose a line of the two-dimensional image during motion of the apparatus for scanning wherein the resultant width of the line is the inverse of a desired resolution level.

Further, in accordance with a preferred embodiment of the present invention, the two-dimensional image can be illuminated by a fluorescent lamp placed directly in line with the optical axis. In this manner, no light guide is necessary.

Finally, there is provided in accordance with a preferred embodiment of the present invention, a method of color separation scanning of an input image comprising the steps of prescanning at least a portion of the input image at least one time for providing output indications of at least brightness of the input image and scanning the input image in accordance with at least the brightness determined in the prescanning step to provide a full-resolution output indication of color separations of said input picture, the scanning step including the steps of moving a carriage on which the input image is placed a predefined distance while a line of the input image is exposed whereby the predefined distance defines a line width which is the inverse of a predetermined resolution level and holding the input image still until electronic processing finishes.

BRIEF DESCRIPTION OF THE DRAWINGS

The present invention will be understood and appreciated more fully from the following detailed description taken in conjunction with the drawings in which :

Fig. 1A is a pictorial illustration of elements of the color separation scanner constructed and operative according to a preferred embodiment of the present invention ;

Fig. 1B is a schematic side view illustration of the apparatus of Fig. 1A ;

Fig. 1C is a pictorial illustration of an embodiment of the apparatus of Fig. 1 for use in scanning reflectives ;

Fig. 1D is a pictorial illustration of an embodiment of Fig. 1A for use with a fluorescent lamp located directly on the optical axis ;

Figs. 2A and 2B are schematic side view illustrations indicating the operation of a pair of objectives in the apparatus of Fig. 1 ;

Fig. 3A is a detailed sectional illustration of the scanning head forming part of the apparatus of Fig. 1 ;

Fig. 3B is a pictorial schematic illustration indicating the locations of three image planes in the apparatus of Fig. 1 ;

Figs. 4A and 4B are respectively plan and side views of a cartridge useful in the apparatus of Fig. 1 ;

Figs. 5A and 5B are pictorial illustrations of the closing of the cassette of Fig. 4 ;

Fig. 6 is a pictorial illustration of insertion into the apparatus of Fig. 1 of a cassette of Fig. 4 holding a document to be scanned ;

Fig. 7 is a detailed sectional illustration of an alternative scanning head design, similar to that of Fig. 3A but having a grooved light path ;

Fig. 8 is a detailed sectional illustration of a portion of the grooved light path of the scanning head of Fig. 28 ;

Figs. 9A and 9B are graphs indicating two alternative types of movement of the image during scanning ;

Fig. 10 is a diagram illustrating line averaging according to a preferred embodiment of the invention ;

Fig. 11 is a graph illustrating a stop spiral scanning cycle employed in accordance with a preferred embodiment of the present invention ;

Fig. 12 is an illustration of an alternative embodiment of the apparatus of Fig. 1B, employing fiber optics light guides ;

Figs. 13A and 13B illustrate two alternative color separation configurations employing a rotating color filter wheel ;

Fig. 14 illustrates a configuration of the present invention employing a light table assembly ;

Figs. 15A and 15B are detailed illustrations of a cassette holder useful in the apparatus of Fig. 6 ; and

Fig. 16 is a schematic illustration of a cassette with asymmetric dimensions.

DETAILED DESCRIPTION OF A PREFERRED EMBODIMENT

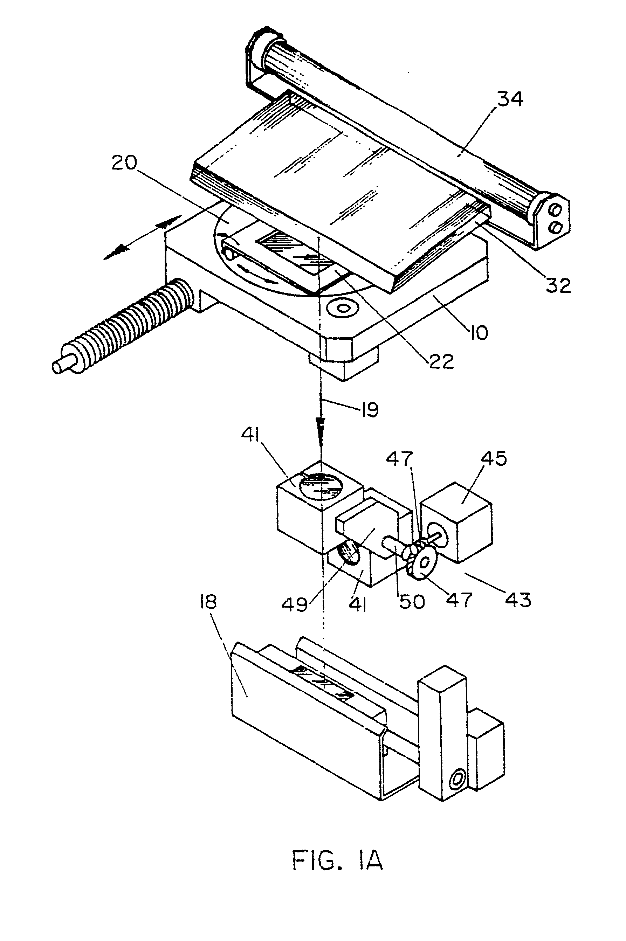

Reference is made to Fig. 1A which illustrates a color separation scanner constructed and operative in accordance with a preferred embodiment of the present invention. The scanner comprises a frame, not shown for the sake of clarity, onto which are mounted the elements illustrated in Fig. 1A.

An X movable carriage 10, of conventional construction, is provided for support and desired positioning of a two-dimensional input image to be scanned. A CCD array scanning head 18, arranged in a fixed location along an optical axis 19, is provided for scanning one line of the input image.

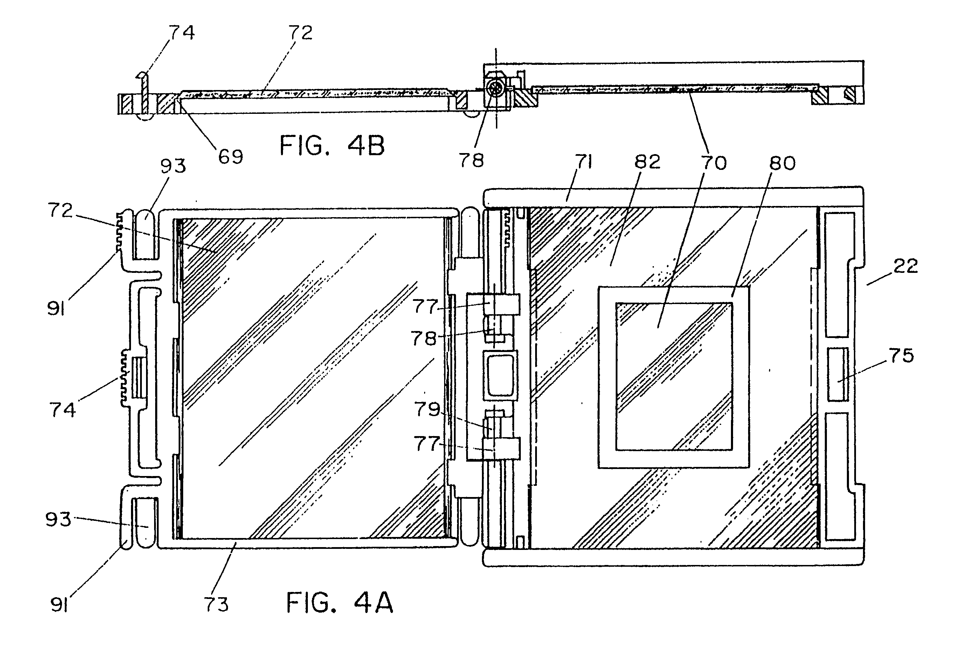

Carriage 10 is provided with a rotatable cassette holder 20, which is preferably arranged for 360° rotation in the plane of the two-dimensional input image and is driven in such rotation typically by an electric motor (not shown). Removably mounted on cassette holder 20 is a selected cassette 22, typically of the type shown in Figs. 4A and 4B.

A light guide 32 is disposed above carriage 10 for guiding light from a slit aperture fluorescent lamp 34 to an illuminated strip intersecting optical axis 19, for scanning of transparencies. Carriage 10 is operative, in addition to selecting the desired rotation angle of the cassette 22, for scanning motion.

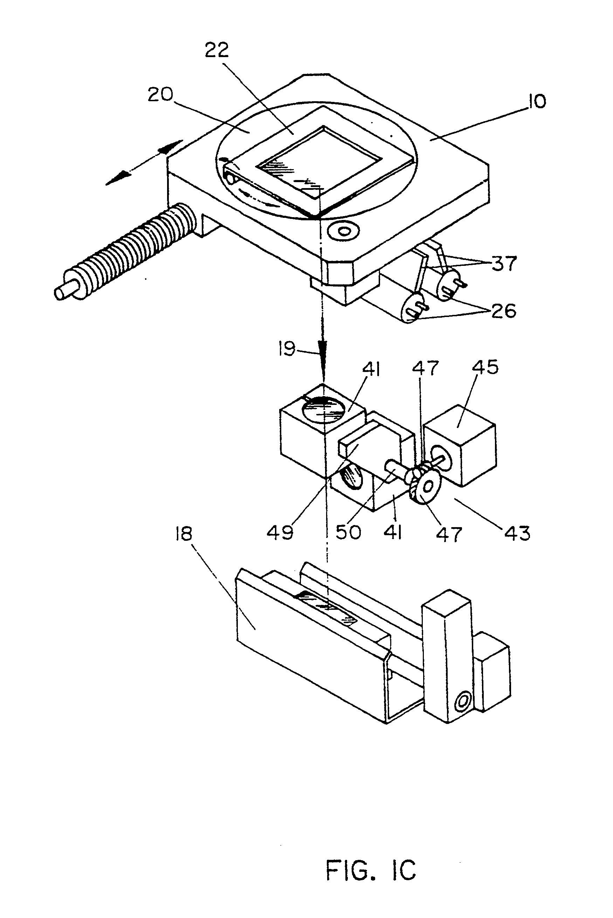

In accordance with an alternative embodiment of the present invention, as shown in Fig. 1C, opaque two-dimensional input images, hereinafter termed "reflectives", can be scanned. For this purpose, a peripheral array of fluorescent lamps 26 and associated light guides 37 are located below carriage 10 for illuminating reflectives.

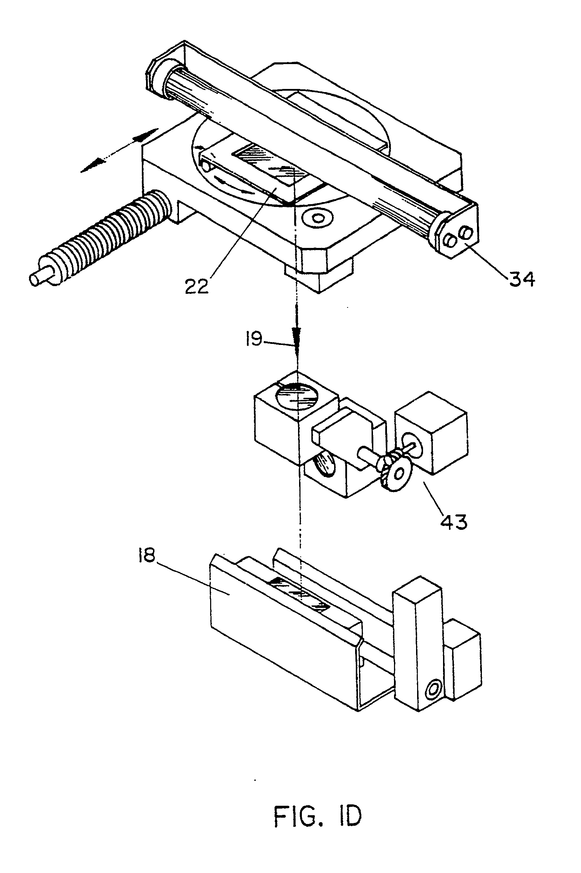

According to a second alternative embodiment of the invention, illustrated in Fig. 1D, fluorescent lamp 34 is placed directly above cassette 22 and intersecting the optical axis 19. In this manner, a strip of the two-dimensional image is illuminated.

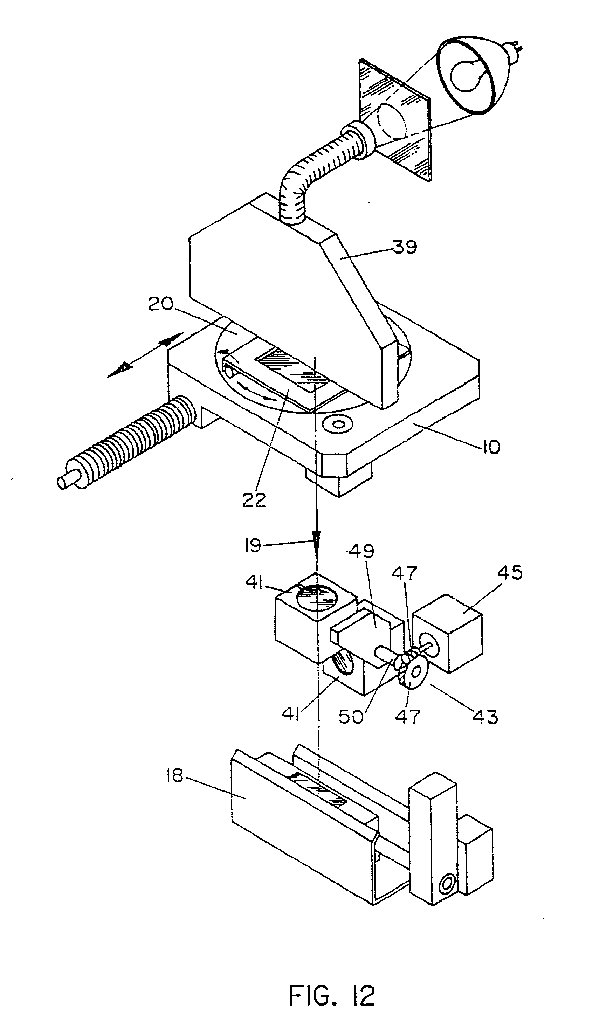

According to a third alternative embodiment of the invention, illustrated in Fig. 12, fiber optic light guide 39 may be employed in place of light guide 32.

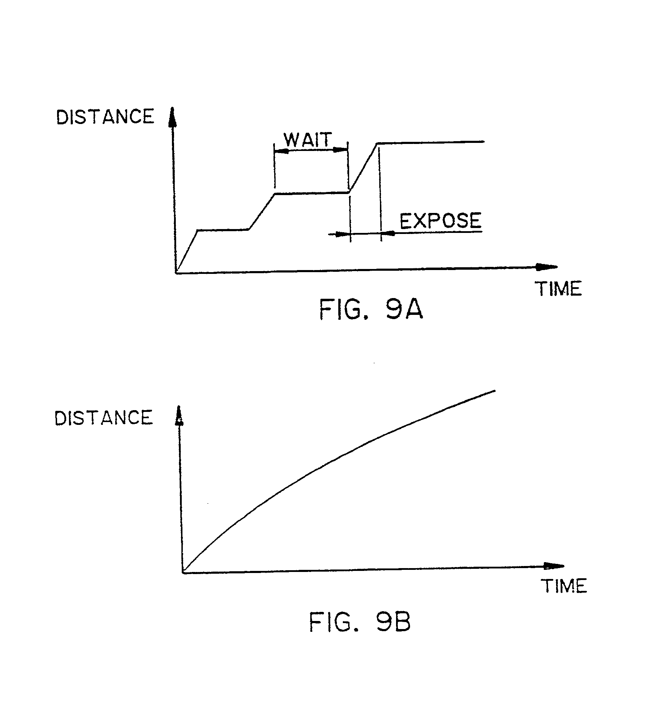

The two-dimensional input image, whether transmissive or reflective is scanned using scanning steps which employ either continuous or step-wise movement of the image. In a step-wise mode of operation, illustrated diagrammatically in Fig. 9A, the carriage carrying the image moves a certain distance while a line is exposed, and then stops until the electronic processing of that line is terminated, moves while exposing a new line and then stops again. This movement causes an area of the image to be optically averaged where the amount of averaging determines the scanning resolution and depends on the width of the exposed line. This technique allows the scanner to provide variable resolutions with an fixed optical setting. In a continuous mode of operation, illustrated diagrammatically in Fig. 9B, exposures are made while the carriage is moving continuously.

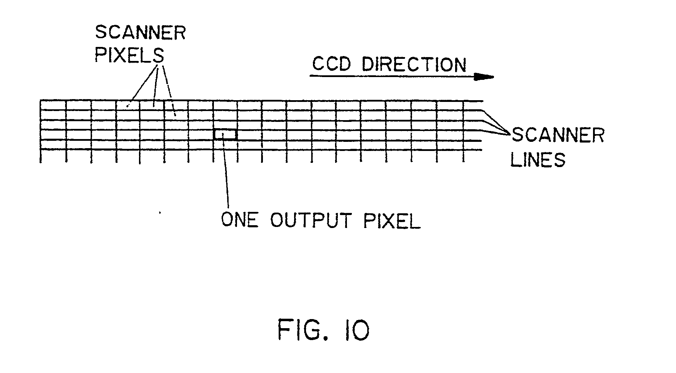

In accordance with a preferred embodiment of the present invention, noise in the image produced by the scanner is reduced by scanning the original with a resolution higher by a certain integer factor k than the required final resolution and averaging k consecutive lines to form one output line. This technique is illustrated diagrammatically in Fig. 10.

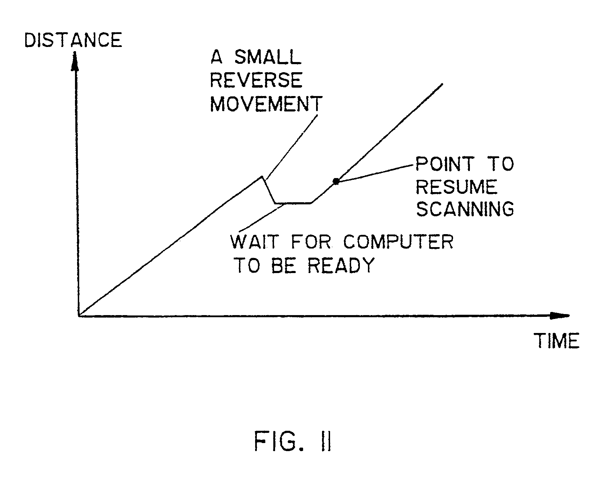

Additionally in accordance with a preferred embodiment of the present invention, a stop-spiral scanning technique is provided for dealing with situations when the computer system cannot handle the high data rate of the scanner, when the scanner is operating in a continuous scanning mode. The stop-spiral scanning technique, which is illustrated diagrammatically in Fig. 11, comprises the following steps :

    stop movement ;

    move backwards ;

    wait for the computer to be ready to receive data ;

    begin forward acceleration ;

    resume scanning when the stop location is reached.

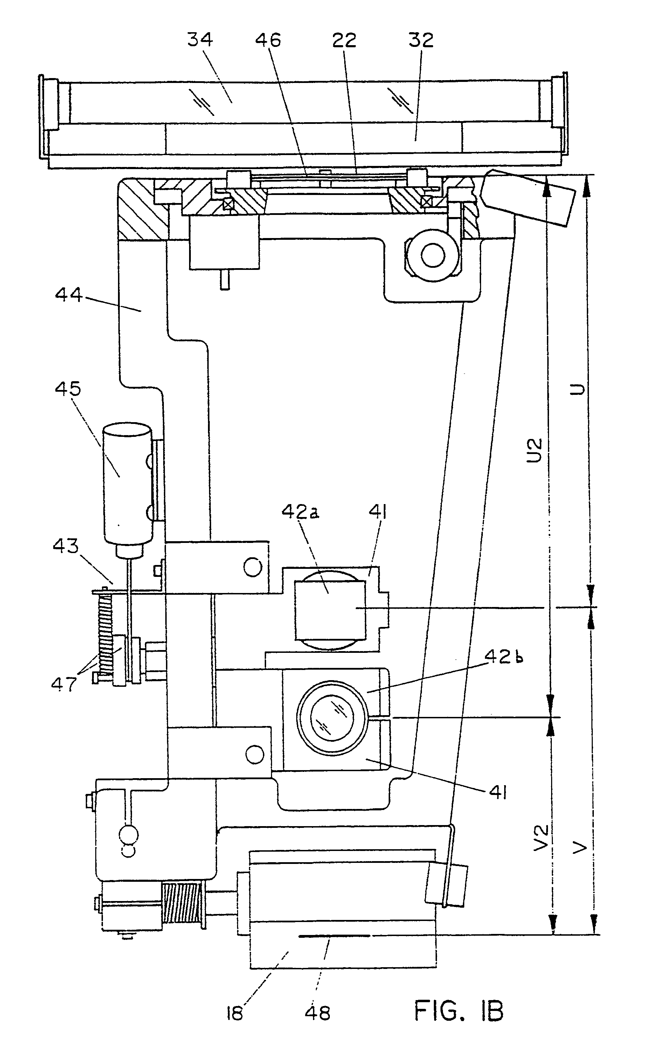

Color separation scanning is carried out by causing the input image to be line scanned at optical axis 19 by scanning head 18 via a selected one of magnification lenses 42 (see Fig. 1B) each stored in a lens housing 41. Selecting apparatus 43 moves the selected lens housing 41 to its location in an optical path defined by optical axis 19 and removes any other lens housing 41 from the optical path.

It is a particular feature of the present invention that the scanner may be used for both transparencies and reflectives. It is also a particular feature of the present invention that rotation of the input image to be scanned may be accomplished readily by physically rotating the cassette holder 20.

By virtue of employing input image mounting cassettes and an easily replaceable carriage, the range of input image sizes that can be scanned may extend up to 11 x 11 inch transparencies and reflectives.

Reference is now made to Fig. 1B which illustrates a cross-sectional view of the scanner of the present invention as it is connected together in a frame 44. Frame 44 is provided for maintaining a fixed distance between cartridge 22, holding a transparency 46, and an image detector 48 enclosed in scanning head 18. Lamp 34 illuminates transparency 46 with white light, via light guide 32, and the resultant colored signal is received by an active one of lenses 42, denoted 42a in Fig. 1B and located a distance U from transparency 44. Active lens 42a images the colored signal from the transparency onto detector 48, a distance V from lens 42a.

It will be appreciated that the focal length f of lens 42a is defined by the following equation :

$$1/f = 1/U + 1/V \quad (1)$$

and subject to the following constraint :

$$U + V = K \quad (2)$$

where K is a constant, typically equivalent to 45 cm, and U and V are positive values. Thus, any lens whose focal length f solves equation 1, subject to the constraint of equation 2, can be used in the scanner of the present invention. For example, a second lens 42b is shown in Fig. 1B, located a distance $U_2$ from the transparency 46 and a distance $V_2$ from the detector 48.

It is a feature of the present invention that a multiplicity of levels of magnification are achieved by defining a multiplicity of locations corresponding to the appropriate distances from the transparency 46 and the detector 48 for a multiplicity of lenses. It will be appreciated that this feature minimizes the number of moving parts in the system. The only movement of lenses consists of bringing a newly selected lens 42 to its defined location and of removing a previously selected lens from its defined location. No movement of the scanning head 18 is required during the exchange of the lenses.

In accordance with a preferred embodiment of the present invention, the selecting apparatus 43 (Fig. 1A) comprises a motor 45, gears 47 and a locating bar 49. It will be appreciated that locating bar 49 is designed such that when a lens housing 41 is in the optical path, its corresponding lens 42 is appropriately located.

In accordance with an alternative embodiment of the present invention, selecting apparatus 43 is operative to fine tune the location of each lens 42 about its nominal location. This is useful to overcome slight mechanical changes caused by temperature shifts and ensures that each lens 42 is always located at the optimum location for achieving the best focus.

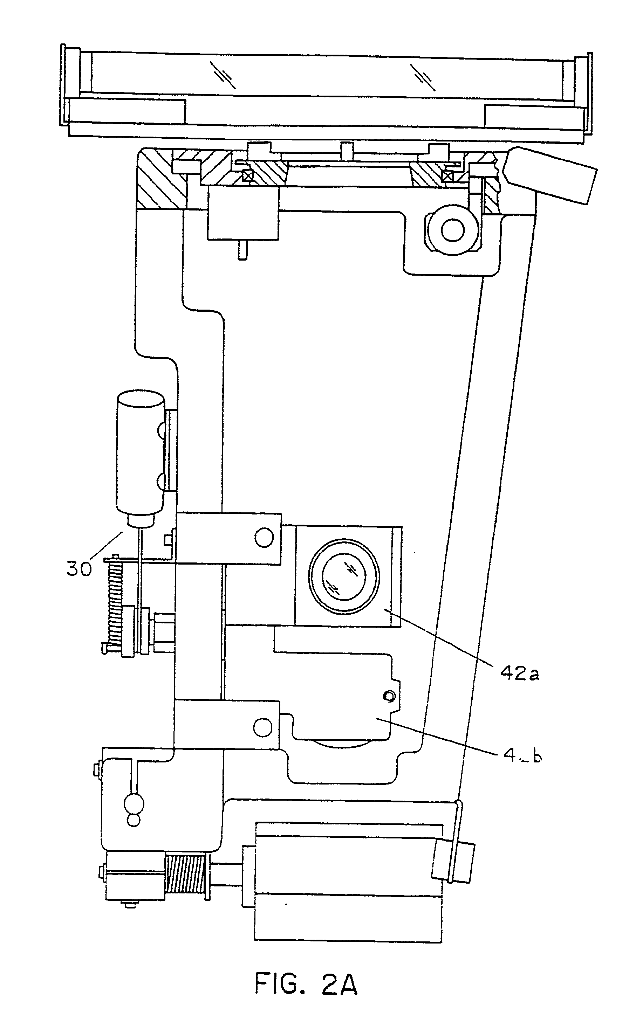

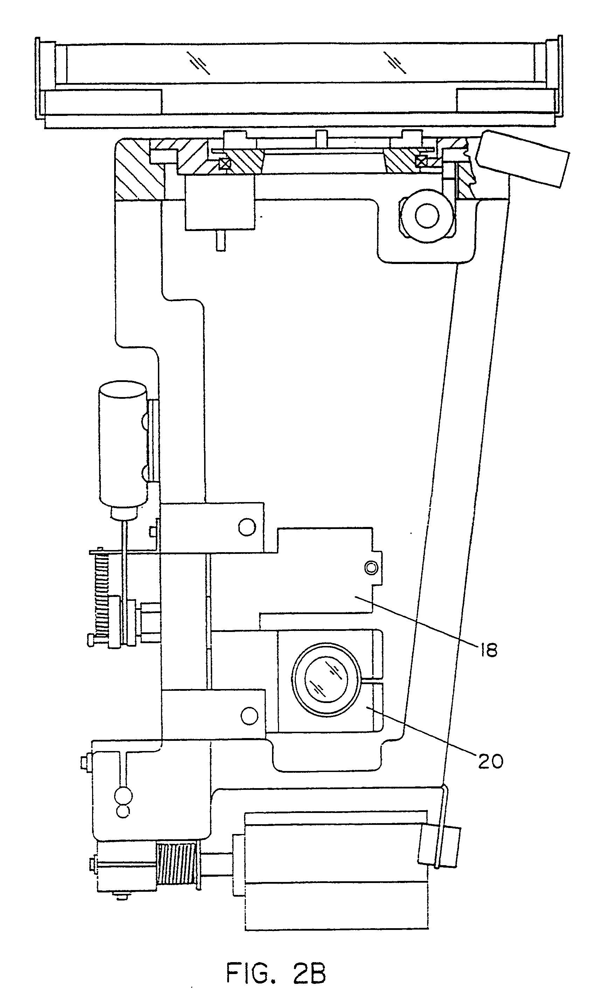

Reference is now made to Figs. 2A and 2B which illustrate a side view of the scanner of the present invention with lenses 42a and 42b in active and passive locations where the active location is that in which the lens 42 faces the cassette 22. In Fig. 2A, lens 42a is the passive lens and 42b is the active lens. In Fig. 2B, the opposite is true.

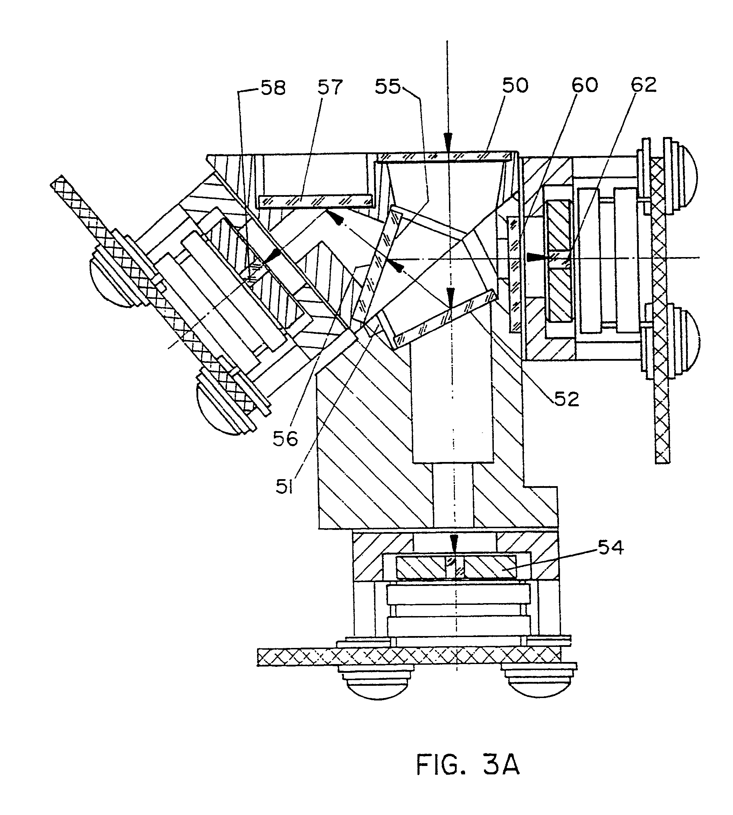

Reference is now made to Fig. 3A which illustrates the scanning head 18 of Figs. 1A and 1B. Light rays from one of lenses 42 (Fig. 1A) pass through an entrance window 50, which also serves as an infrared radiation removing filter, and impinge upon a first surface 51 of a first dichroic filter 52. Filter 52 passes the blue separation of the spectrum onto a linear CCD array 54.

The yellow separation, combining the green and red separations, is reflected at the first surface 51 to a first surface 55 of a second dichroic filter 56. Filter 56 passes the green separation via a mirror 57 to another linear CCD array 58. The red separation is reflected at the first surface 55 to a third filter 60, which passes it to yet another linear CCD array 62.

The structure of the optical head described hereinabove and illustrated in Fig. 3A has the following particular features :

The angles of incidence upon all of the color separation filters are less than 25 degrees. This feature reduces optical aberrations which would occur to a greater extent at larger angles of incidence such as 45 degrees.

Color separation occurs at the respective first surfaces 51 and 55 of the respective filters 52 and 56. This feature greatly reduces the incidence of ghost images which could result from multiple reflections from the double surfaces of the filters.

The light corresponding to each of the color separations passes through only a 2 mm thickness of glass in a preferred embodiment, wherein the entrance window 50 is of 1 mm thickness and each of the filters 52, 56, and 60 is of 1 mm thickness. The relatively small thickness of glass through which the light passes maintains optical aberrations at a minimum, thereby improving image contrast.

The optical scanning head 18 is characterized by a relatively high numerical aperture (F-number 1.85) in a compact configuration defining an optical distance of 50 mm between the entrance window 50 and the various CCD arrays.

The scanning head does not limit the length of the optical detector employed.

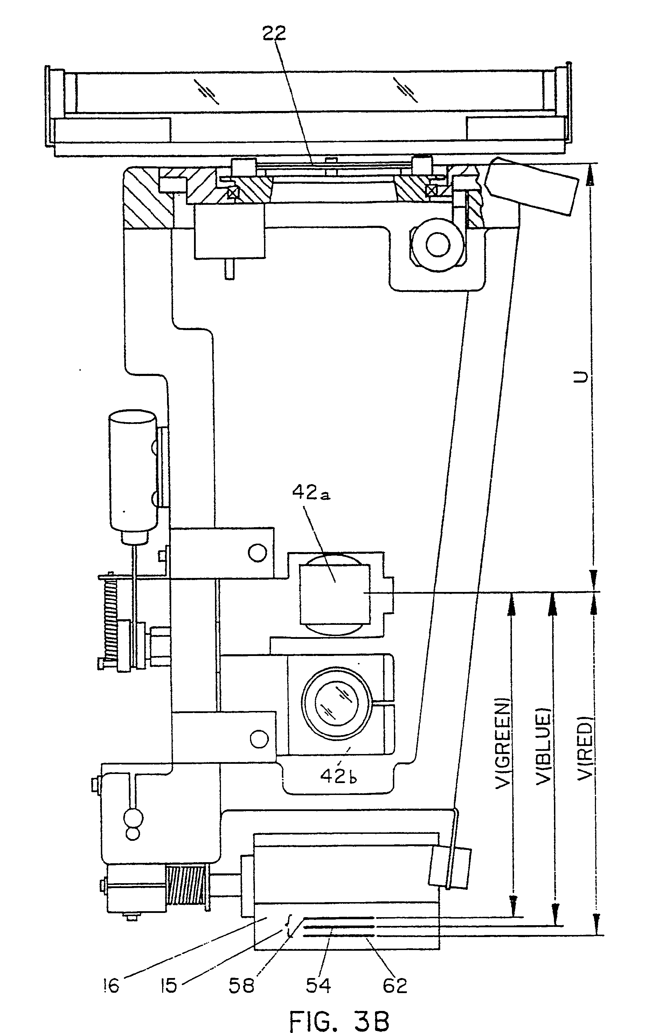

Finally, optical aberrations are reduced by recognizing that the optical aberrations inherent in any lens 42, such as lens 42a, result in differing focal lengths for the red, green and blue color separations. Therefore, in accordance with a preferred embodiment of the present invention, each CCD array 54, 58 and 62 is located at the best focal plane of the lens 42 for the color separation that it senses. This is shown in Fig. 3B which shows three values of V, $V_{green}$, $V_{blue}$ and $V_{red}$. It will be noted that the distance U remains the same.

It will be appreciated that the optical aberration of all lenses 42 used in the scanner of the present invention are required to be substantially equal. By doing so and by locating the CCD arrays 54, 58 and 62 at the focal planes common to the entirety of the lenses 42 for the colors blue, green and red, respectively, substantially equivalent focusing is then achieved for the entirety of lenses 42, regardless of their magnification levels. It will also be appreciated that typically, the focusing for all lenses 42 is the best possible focusing.

Filters 52, 56, and 60 are employed herein according to a preferred embodiment of the invention to "slice" the overall spectral range into a number of parts, all of which are to be used, here Red, Green, and Blue. Ghost images may be produced when light impinges at an angle other than 90 degrees on a filter and is reflected backwards by the second surface of the filter and thereafter reflected forward by the first surface thereof towards a detector, resulting in the creation of a second relatively weak and unfocused image in addition to the first image.

The dichroic filters employed in the invention comprise colored glass having a dichroic multilayer coating on their respective first surfaces and a conventional optical anti-reflective coating on their respective second surfaces.

The anti-reflective coating tends to minimize the reflection from the second surface and is effective to reduce ghost images. Additionally, in view of the fact that ghost images consist mainly of parasite colors, i.e. the ghost of the blue separation comprises mainly green and red colors, etc., the colored glass is effective to attenuate these parasite colors. In the blue separation, for example, a blue colored glass substrate in filter 52 absorbs the green and red colors and the anti-reflective coating on the second surface thereof may be optimized to the blue section of the spectrum to eliminate the possibility of a blue color ghost image.

The use of colored glass filters also allows less expensive optical coating techniques to be employed, because the glass filter substrates absorb colors that otherwise would have to be transmitted by the coatings.

It is a particular feature of the present invention that the light guide 32 employed therein, as described hereinabove with reference to Fig. 1A, acts as a light spatial averaging device. At the output side of the light guide, each point represents a contribution of all points along the fluorescent lamp. The light is reflected many times within the light guide to create a new light source, i.e. the light guide output, which has a spatially flat intensity distribution. Therefore, changes in the spatial distribution of the intensity of the fluorescent lamps do not affect the spatial distribution of the intensity of the output of the light guide.

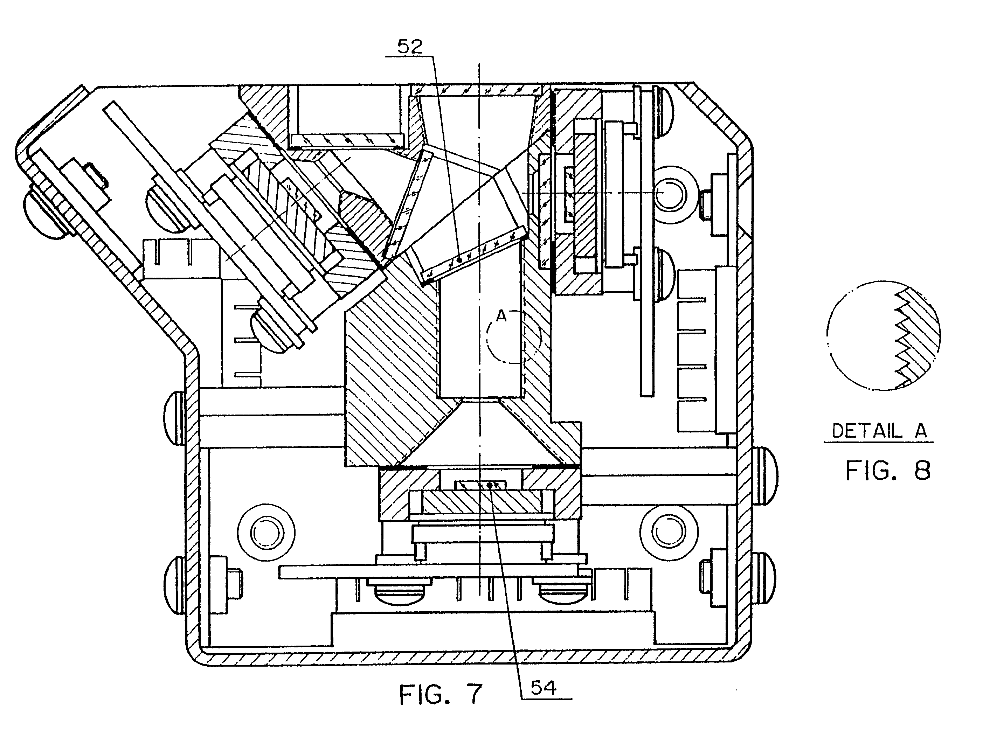

According to a preferred embodiment of the present invention, the inner surfaces of the optical head are configured so as to reduce the effect of light reflection. As seen generally in Fig. 7 and in detail in Fig. 8 the inner surfaces of the optical head, such as the light path between filter 52 and CCD array 54 may be grooved to reduce the effect of reflection of stray light.

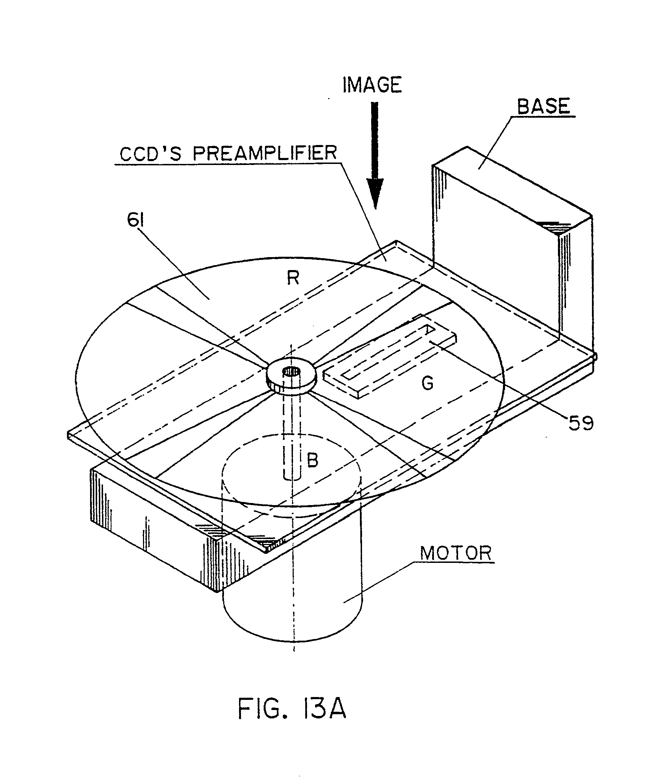

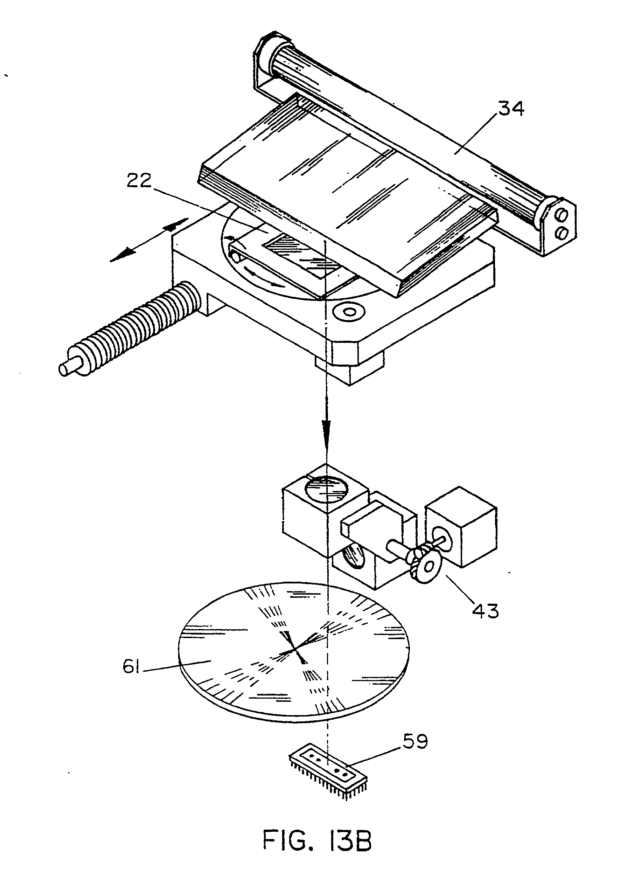

According to an alternative embodiment of the present invention, color separation may be accomplished alternatively by using a single CCD 59 and a rotating color filter wheel 61 disposed adjacent the CCD. Such a configuration is illustrated in Fig. 13A. Rotating color filter wheel 61 is shown incorporated into the scanner of the present invention in Fig. 13B.

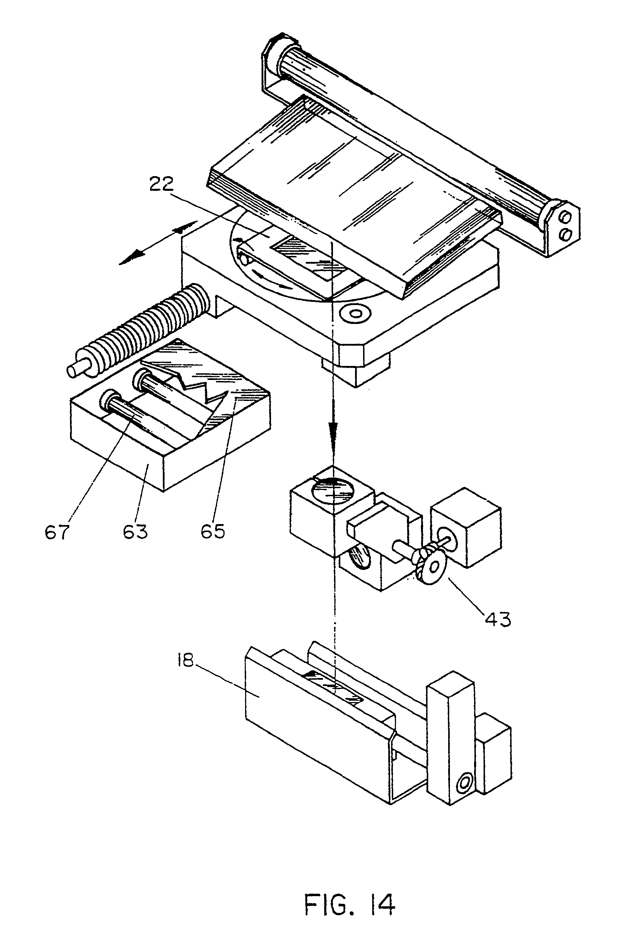

According to a second alternative embodiment of the present invention, shown in Fig. 14, a light table assembly 63 is included to enable the scanned transparency to be viewed between the scanning cycles. The light table assembly 63 comprises a diffuser 65 and a screen 67.

According to a third alternative embodiment of the present invention, color separation can be accomplished via a scanning head comprising a three-channel color linear CCD imager, such as the KLI-50603 manufactured by Kodak. The CCD imager comprises filters which are typically integral color filters.

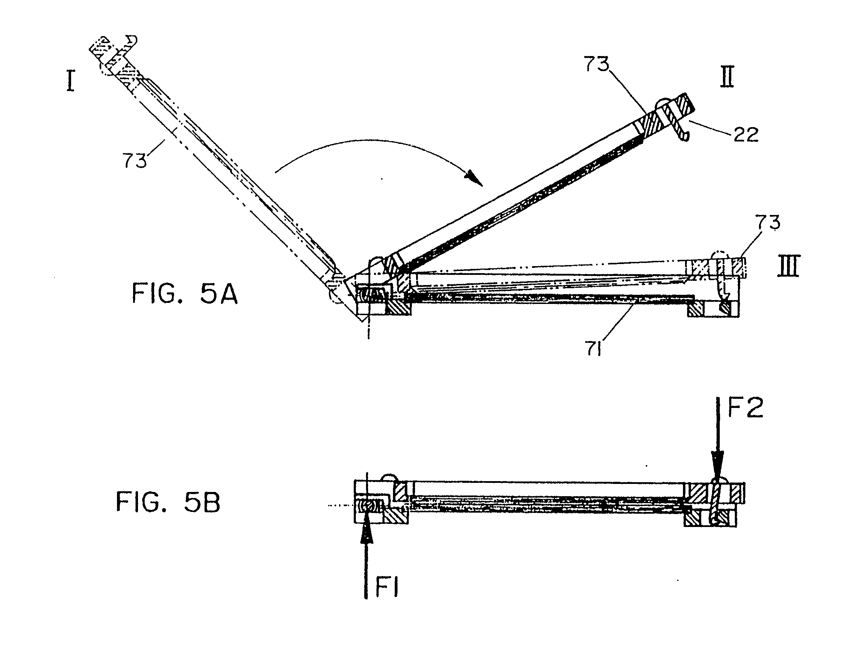

Reference is now made to Figs. 4A, 4B, 5A and 5B, which illustrate a cassette 22 (Fig. 1A), which is useful in conjunction with both transparencies and reflectives in accordance with a preferred embodiment of the present invention. The cassette 22 is typically formed of two planar pieces of glass 70 and 72, whose inner surfaces are roughened, as by etching, in such a way as not to diminish image contrast but to eliminate Newton rings which would be created when transparencies are placed against non-etched glass. Alternatively, an anti-reflective coating can be placed on the glass pieces 70 and 72. The foregoing techniques eliminates the need for refraction index matching oil between the transparencies and the glass plates, as in conventional scanners.

The glass pieces 70 and 72 are framed by frames 71 and 73, respectively, where frame 73 is small enough to fit inside of frame 71 when the cassette 22 is closed. Glass piece 72 is edged by a knife edge 69 useful for maintaining it in its frame 73. Glass piece 70, on the other hand, is held in its frame 71 by the elastic force produced while the glass is inserted between the frame 71 and a stopper 1.

The two frames 71 and 73 are joined by hinges 78, each comprising a hinge pin 79 and a spring leaf 77. The center hinge pin 79 is typically located slightly lower than the surface of glass 70. When frame 73 is rotated into frame 71 and the cassette 22 is closed, the hinge pin 79 and the spring leaf 77 push against each other, thereby putting frames 71 and 73 in tension. Thus, the two glass pieces 70 and 72 are firmly pushed together.

A lock comprising a hook 74 attached to frame 73 and an eye 75 attached to frame 71 is provided to hold the two frames 71 and 73 together against the force due to the eccentricity of hinge pin 79.

Fig. 5A illustrates the cassette 22 while in the process of closing. Frame 71 remains stationary as frame 73 rotates into it. Three positions of frame 73, marked I, II and III, are shown. Location I is a position early in the rotation, location II is a position intermediate an initial position and a final one, and location III is a position prior to closing the cassette 22. It should be noted that location III of frame 73 is the non-tensioned location of frame 73 on top of frame 71.

Fig. 5B shows the final position of frame 73 inside frame 71 as well as the locations of two tension forces $F_1$ and $F_2$ on the closed cassette 22 caused by the eccentric location of hinge 79.

An inner opal mask 80, having a typical optical density of 0.6, is provided on glass piece 70 to obscure the area external of the film. The mask ensures that the brightest location will be within the transparency but nevertheless allows parts of the transparency which are covered by the mask to be viewed, so that reference points outside of the image to be scanned can be seen.

An outer opaque black mask 82 is provided around opal mask 80 and is arranged so as to darken the portion of glass piece 70 outside of opal mask 80.

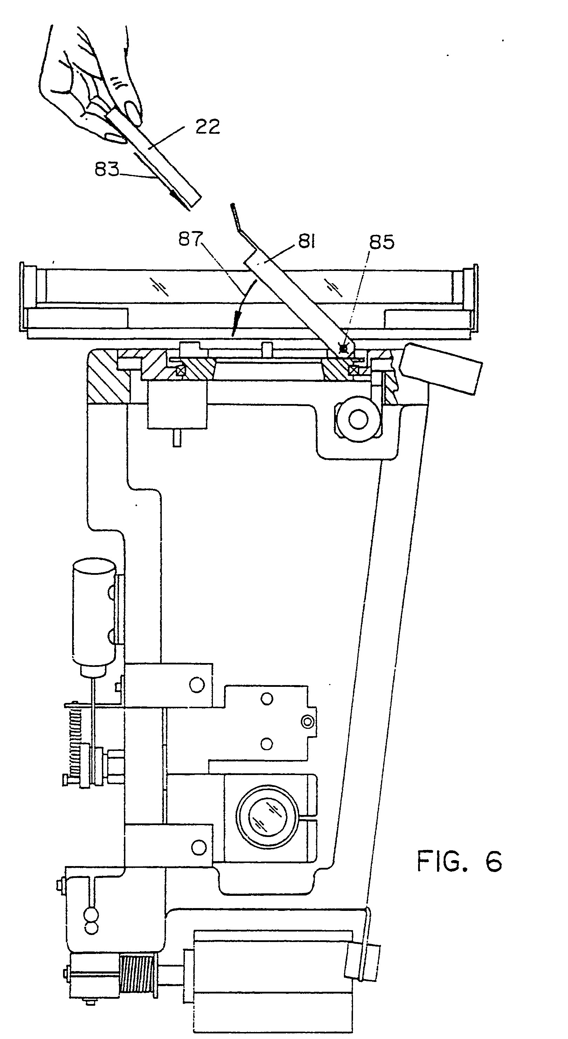

Reference is now made to Fig. 6 which illustrates the loading of a cassette 22 into the scanner of the present invention. The closed cassette 22 is loaded into an open cassette holder 81 in the direction of arrow 83. The cassette holder 81 is closed, through rotation about a pin 85, in the direction of arrow 87. Flat springs 93 (Fig. 4A) push against the cassette holder 81 and ensure that the cassette 22 remains in a fixed location inside the cassette holder 81. To remove the cassette 22, the cassette 22 is drawn out of cassette holder 81.

Cassette holder 81 inserts cassette 22 into the scanner in a cassette tape manner, whereby the closing of cassette holder 81 locates cassette 22 in its operative location inside of cassette holder 20 (Fig. 1A).

Cassette handles 91 (Fig. 4A), integral to frame 73, are provided for holding the cassette 22 when loading and unloading the cassette 22 from the scanner.

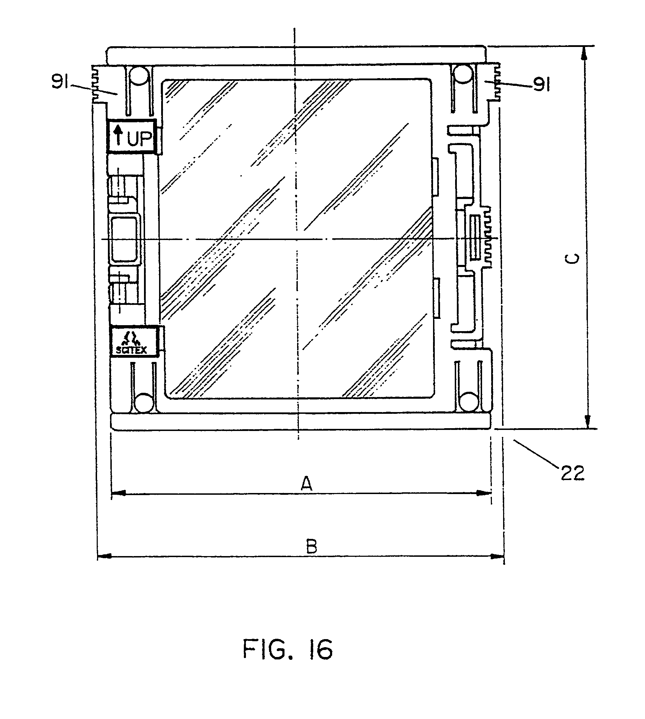

It will be appreciated that frames 71 and 73 can have a asymmetric shape so as to fit in cassette holder 81 in one direction only. This is shown in Fig. 16 where the smallest width of cassette 22 is marked A. Since the cassette handles 91 extend from the frames 71 and 73, the full width of the cassette 22 is larger than the width A and is marked as B. The length of the cassette 22 is marked C. The cassette 22 will only fit into a cassette holder 81 which has a width slightly larger than the width A, but smaller than the dimensions marked B and C. In such a cassette holder 81, the cassette 22 can only be inserted in one direction. The cassette handles 91 will not be inside the cassette holder 81 and will therefore, be readily available for removing the cassette 22 from the holder 81.

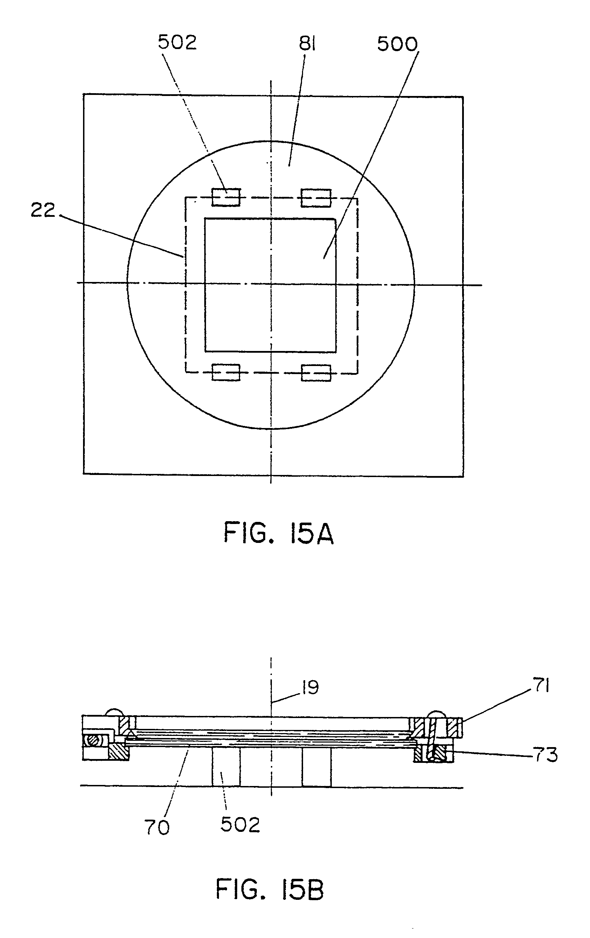

Reference is now made to Figs. 15A and 15B which detail the cassette holder 81. Fig. 15A is a top view and Fig. 15B is a side view. Cassette holder 81 comprises a rectangular window 500, through which the two-dimensional image will be scanned, and four reference surfaces 502 against which one of glass pieces 70 or 72 of cassette 22 is pressed. The reference surfaces 502 jut out from the surface of cassette holder 81, in the direction of the optical axis 19, and are accurately machined so that the glass piece 70 or 72 is perpendicular to the optical axis when placed on the reference surfaces 502. In this manner, any inaccuracies in the formation of the frames 73 and 71 do not affect the alignment of the two-dimensional image along the optical axis 19.

The scanning technique will now be described briefly. When a new image is sought to be scanned, it is first subject to a prescan carried out using the CCD array scanning head 18.

The operative parameters of the prescan, such as reflective or transmissive scanning, and nominal input size are initially set by the operator through host computer 103. Alternatively, a bar code, containing the operative parameters of the prescan and placed at the side of the cassette, can be read.

The dynamic range of the CCD is determined by exposure control of the CCDs. This is achieved by governing the integration time and the intensity of the light illuminating the CCDs. In practice, the analog amplification is calibrated so that the saturation of the CCDs occurs at a given voltage which is transformed to digital information and read by the computer. This reading enables the computer to decide how to set the exposure time and the light level.

The scanning sequence is generally as follows :

A first prescan is initiated by placing a loaded cassette 22 in the cassette handle 81, as shown in Fig. 6. Upon closure of cassette handle 81, the cassette 22 is located in the appropriate position on cassette holder 20. The scanner is then set to prescan the input image. Prior to this prescan, however, the CCD arrays are exposed to the light source output of the light guides and the light level and the integration times of the CCD arrays are adjusted for full dynamic range. The light source is then masked to provide calibration of the darkness with the same integration time to produce dark correction information. Thereafter, an intermediate light density is provided for calibration of responsivity of individual CCD cells.

Prescan is then performed, as are responsivity and dark signal calibrations, and the image is displayed on a monitor to the operator. The brightness of point detected during the prescan is displayed with maximum monitor brightness.

The image of the image seen on the screen after a prescan is in low resolution so that it is impossible to judge its sharpness. Using a cursor operated by a mouse, a point on the screen can then be selected around which a second prescan can be carried out so that the image will now appear with full resolution and its sharpness can be evaluated.

The prescan image is used by the operator to enter his requests, such as crop lines, rotation angle, and color and sharpening parameters.

A new integration time is then calculated taking into account the brightest image level measured previously in order to stretch this level to the maximum dynamic range of the detector. Dark signal calibrations are then carried out again on the basis of the new integration time. After this, a final high resolution scan occurs.

The electronic circuitry for operating the color separation scanner of the present invention is disclosed in U.S. Patent Application 07/044,428, corresponding to Israel Patent Application 78675, and is incorporated herein by reference.

It will be appreciated by persons skilled in the art that the present invention is not limited to what has been particularly shown and described hereinabove. Rather the scope of the present invention is defined only by the claims which follow :

## Claims

1. A color separation scanner comprising ;
    a support arranged for mounting thereon of a two-dimensional image to be scanned ; and
    color separation sensing means arranged for sensing said two-dimensional image to provide electrical signals representing color separations of said two-dimensional image, said color separation sensing means comprising :
        a scanning head located a fixed distance from said two-dimensional image ;
        at least first and second objective lens assemblies ; and
        means for selectively arranging each of said at least first and second objective lens assemblies in fixed locations along the optical path between said image and said scanning head.

2. A color separation scanner comprising ;
    a support arranged for mounting thereon of a two-dimensional image to be scanned ; and
    color separation sensing means arranged for sensing said two-dimensional image to generally simultaneously provide electrical signals representing color separations of said two-dimensional image, said color separation sensing means including a scanning head located a fixed distance from said two-dimensional image.

3. A color separation scanner according to claim 1 and wherein said scanning head comprises a plurality of generally parallel CCD arrays, associated with dichroic filter means and each disposed in a different focal plane.

4. A color separation scanner according to claim 1 and wherein said means for selectively arranging include means for locating said objective lens assemblies in a nominally fixed location along the optical path between said image and said fixed scanning head and means for fine tuning the location of said objective lens assemblies near said nominally fixed location.

5. A color separation scanner according to claim 3 and wherein said CCD arrays are positioned in an optical head such that each CCD is positioned at the best focal plane for the color separation that it senses and wherein said best focal plane is substantially identical for each of said at least first and second objective lens assemblies.

6. A color separation scanner comprising ;
a support arranged for mounting thereon of a two-dimensional image to be scanned ; and
color separation sensing means arranged for sensing said two-dimensional image to provide electrical signals representing a multiplicity of color separations of said two-dimensional image,
said color separation sensing means defining an optical axis and including at least first and second objective lenses each having a multiplicity of focal planes corresponding to said multiplicity of color separations wherein for each of said color separations an intersection of said corresponding focal plane with said optical axis is substantially identical for all of said at least first and second objective lens assemblies.

7. A color separation scanner comprising ;
a cassette arranged for mounting thereon of a two-dimensional image to be scanned ; and
color separation sensing means,
said cassette comprising ;
first and second transparent plates mounted on respective frames ; and
joining means openable to at least 90° for fixedly and flexibly joining together said first and second transparent plates.

8. A color separation scanner according to claim 7 and wherein said joining means comprise means for elastically forcing together said first and second transparent plates when said cassette is closed.

9. A color separation scanner according to claim 7 and wherein said means for elastically forcing together comprise a hinge eccentrically mounted to said frames for forcing said first and second transparent plates firmly against each other when said cassette is closed and a lock for ensuring that said frames stay together when said cassette is closed.

10. A color separation scanner according to claim 7 and comprising means for receiving said cassette and for placing said cassette in an operative location on a cassette holder.

11. A color separation scanner according to claim 10 and wherein said cassette holder includes reference surfaces jutting out from a surface of said cassette holder on which rest one of said first and second transparent plates.

12. A color separation scanner according to claim 10 and wherein said frames have unsymmetrical dimensions thereby to ensure that said cassette is inserted into said cassette holder in only one direction.

13. A color separation scanner according to claim 10 and wherein said cassette holder is rotatable within 360°.

14. A color separation scanner according to claim 10 and wherein said cassette holder is manually rotatable.

15. A color separation scanner according to claim 10 and wherein said cassette holder is rotatable via motor means.

16. A color separation scanner according to claim 1 and also comprising a light table assembly comprising a lamp, a set of filters, a diffuser and a screen.

17. A color separation scanner according to claim 10 and also comprising a light table assembly comprising a lamp, a set of filters, a diffuser and a screen.

18. A color separation scanner according to claim 17 and wherein said cassette holder is rotatable to a desired scan angle in front of said light table thereby to preview said two-dimensional image at the desired scan angle.

19. A color separation scanner according to claim 1 and wherein said color separation sensing means comprises a single CCD array and a plurality of different filters disposed in selectable optical communication with said CCD array.

20. A color separation scanner according to claim 2 and wherein said color separation sensing means comprises a three-channel CCD imager.

21. A color separation scanner according to claim 1 and also comprising a source of light providing a light beam and fiber optics to guide said light beam to said color separation sensing means.

22. A color separation scanner according to claim 1 and also comprising a fluorescent lamp directly in line with said optical path.

23. A color separation scanner according to claim 1 and also comprising a fluorescent lamp and a light guide.

24. A color separation scanner according to claim 1 and comprising means for scanning said two-dimensional image and including means to expose a line of said two-dimensional image during motion of said means for scanning wherein the resultant width of said line is the inverse of a desired resolution level.

25. A cassette comprising ;
 first and second transparent plates mounted on respective frames ; and
 joining means openable to at least 90° for fixedly and flexibly joining together said first and second transparent plates.

26. A cassette according to claim 25 and wherein said joining means comprise means for elastically forcing together said first and second transparent plates when said cassette is closed.

27. A cassette according to claim 25 and wherein each of said first and second transparent plates comprises an etched inner facing surface for preventing the generation of Newton rings.

28. A cassette according to claim 25 and wherein each of said first and second transparent plates is coated with anti-reflective coating.

29. A cassette according to claim 25 and wherein said means for elastically forcing together comprise a hinge eccentrically mounted to said frames for forcing said first and second transparent plates firmly against each other when said cassette is closed and a lock for ensuring that said frames stay together when said cassette is closed.

30. A method of color separation scanning of an input image comprising the steps of :
 prescanning at least a portion of said input image at least one time for providing output indications of at least brightness of said input image; and
 scanning said input image in accordance with at least said brightness determined in said prescanning step to provide a full-resolution output indication of color separations of said input picture ;
 said scanning step including the steps of :
 moving a carriage on which said input image is placed a predefined distance while exposing a line of said input image whereby said predefined distance defines a line width which is the inverse of a predetermined resolution level ; and
 holding said input image still until electronic processing finishes.

FIG. IA

FIG. IB

FIG. IC

FIG. ID

FIG. 2A

FIG. 2B

FIG. 3A

FIG. 3B

FIG. 4B

FIG. 4A

EP 0 442 699 A2

FIG. 5A

FIG. 5B

EP 0 442 699 A2

EP 0 442 699 A2

FIG. 6

EP 0 442 699 A2

52

A

54

FIG. 7

DETAIL A

FIG. 8

DISTANCE

WAIT

EXPOSE

TIME

FIG. 9A

DISTANCE

TIME

FIG. 9B

SCANNER
PIXELS

CCD DIRECTION

SCANNER
LINES

ONE OUTPUT PIXEL

FIG. IO

FIG. II

FIG. 12

FIG. 13A

FIG. 13B

FIG. 14

502  81  500

22

FIG. 15A

19  71

73

70  502

FIG. 15B

FIG. 16